# EUROPÄISCHE PATENTSCHRIFT

(11) **EP 1 932 683 B1**
(45) Veröffentlichungstag und Bekanntmachung des Hinweises auf die Patenterteilung: **10.04.2013**
(21) Anmeldenummer: 07020103.3
(22) Anmeldetag: 15.10.2007
(51) Int. Cl.: B60B 33/00

(54) **Befestigunsvorrichtung für den Anbau von Rollenbaueinheiten am Fahrgestell von Transportwagen oder dergleichen**
Mounting device for fitting roller units to the chassis of transport trolleys or similar
Dispositif de fixation pour la construction d'unités de construction de rouleaux sur le châssis de véhicules de transport ou analogues

(30) Priorität: 12.12.2006 DE 102006058764
(43) Veröffentlichungstag der Anmeldung: 18.06.2008
(73) Patentinhaber: Fechtel Transportgeräte GmbH, 33829 Borgholzhausen (DE)
(72) Erfinder: Fechtel, Hinrich, 33819 Borgholzhausen (DE); Brömmelsiek, Ralf, 33790 Halle/Westfalen (DE)
(74) Vertreter: Brandt, Detlef

(56) Entgegenhaltungen:
- WO-A-93/11989
- DE-A1-102004 024 178
- DE-U1- 9 212 883
- DE-U1- 20 102 481
- DE-U1- 29 812 086
- DE-U1-202004 014 452
- GB-A- 2 230 694

## Beschreibung

Die Erfindung betrifft eine Befestigungsvorrichtung für den Anbau von Rollenbaueinheiten an Transportwagen oder dergleichen mit den im Anspruch 1 genannten gattungsbildenden Merkmalen, wie sie aus der DE 20 2004 014 452 U bekannt ist.

Transportwagen für den industriellen Bereich oder den Werkstatteinsatz, aber auch für Büros und Wohnräume, werden in aller Regel an ihrem bodennahen Fahrgestell mit drei oder vier im Allgemeinen als Rollenbaueinheiten bezeichneten Rollvorrichtungen ausgestattet, wobei die Rollvorrichtungen aus einer in einer Rollenhalterung aufgenommenen Rolle oder Rad bestehen und die Halterung wiederum fest oder drehbar an einem Befestigungsteller aufgenommen ist. Dieser Befestigungsteller ist mittig an seiner der Bockrolle abgewandten Seite mit einer Befestigungsmöglichkeit ausgestattet, der die Festlegung am Fahrgestell eines Transportwagens oder dergleichen erlaubt.

Insbesondere bei höheren Belastungen der eingesetzten Transportwagen hat es sich als zweckmäßig erwiesen, die Rollen mit dem Befestigungsteller an einer Montageplatte festzulegen, die wiederum mittels mehrer lösbarer Befestigungsmittel, wie beispielsweise Verschraubungen, am Fahrgestell des Transportwagens montiert wird. Die lösbare Festlegung der Montageplatte erlaubt dabei den Austausch der Rollenbaueinheiten bei Verschleiß oder Beschädigung im Gegensatz zu nicht lösbaren Befestigungstechniken, wie beispielsweise der Verschweißung der Montageplatte am korrespondierenden Fahrgestell des Transportwagens.

Für die Befestigung der Montageplatte mittels der Befestigungsmittel in Form von Schrauben sind am Fahrgestell in aller Regel eine Mehrzahl von Gewindebohrungen vorgesehen, in denen die Schrauben festgelegt werden. Zum Ausgleich von Fertigungstoleranzen können dabei in den Montageplatten Langlöcher vorgesehen sein.

Nachteilig bei der beschriebenen Befestigungstechnik hat sich herausgestellt, dass die im Fahrgestell eingebrachten Gewindebohrungen oftmals mit aus Oberflächenbehandlungen des Fahrgestells resultierenden Ablagerungen in Form von Farbrückständen versehen sind. Darüber hinaus werden die mit den Rollen zu versehenden Transportwagen in aller Regel nach Einbringen der Gewindelöcher einer Strahlbehandlung, beispielsweise mit Sand, unterzogen, um die Oberfläche des Transportwagenfahrgestells für die weiterführende Vergütung von Rost und anderen Verunreinigungen zu befreien und beispielsweise für eine abschließende Pulverbeschichtung vorzubereiten.

Darüber hinaus ist bei den aus dem Stand der Technik bekannten Befestigungsvorrichtungen nachteilig, dass die verwendeten Befestigungsschrauben mittels entsprechender Drehmomentschrauber angezogen werden müssen, um eine ausreichende Festlegung am Fahrgestell zu gewährleisten. Die Verwendung derartiger Drehmomentschrauber ist mit nicht unerheblichen Lärm- und Vibrationsemissionen für das Montagepersonal verbunden.

Aufgabe der vorliegenden Erfindung ist es daher, ausgehend von den geschilderten Nachteilen im Stand der Technik eine Befestigungsvorrichtung der gattungsgemässen Art so weiterzubilden, dass eine kostengünstige Montage der Rollenbaueinheiten durch Verminderung der Montagezeit herbeigeführt wird.

Darüber hinaus soll der Montageablauf vereinfacht werden, wobei insbesondere unter ergonomischen Gesichtspunkten eine Verbesserung der Montagetätigkeit herbeigeführt werden soll.

Diese Aufgabe wird erfindungsgemäß in Zusammenschau mit den gattungsbildenden Merkmalen durch die im kennzeichnenden Teil des Anspruches 1 offenbarte technische Lehre gelöst.

Erfindungswesentlich dabei ist es, dass die Aufnahmevorrichtung mindestens eine mit Durchstecköffnungen an der der Rollenbaueinheit zugewandten Unterseite versehene, hohlprofilförmig ausgebildete Befestigungselemente aufweist, wobei die Befestigungselemente im Wandbereich benachbart der Durchstecköffnungen mit länglichen nutförmigen Ausnehmungen versehen sind, deren Breite kleiner bemessen ist als der Durchmesser der Durchstecköffnungen, und dass zur Verbindung der Befestigungselemente mit der rollenseitigen Montageplatte die Befestigungsmittel ein Schraubenteil und ein zugehöriges Mutternteil aufweisen, wobei entweder das Schraubenteil oder das Mutternteil mit einem Sicherungsbauteil gegen eine Verdrehung des Schraubenteils oder des Mutternteils im Befestigungselement versehen sind und im montierten Zustand innerhalb des hohlprofilförmig ausgebildeten Befestigungselementes im Bereich der Ausnehmungen festgelegt sind. Die Aufnahmevorrichtung kann auch mehrere, vorzugsweise zwei, beabstandet zueinander angeordnete Befestigungselemente aufweisen. Jedes Befestigungselement besitzt dabei Durchstecköffnungen an seiner der Rolle zugewandten Unterseite.

Durch die geschilderten Merkmale können die mit einer Montageplatte versehenen Rollen unabhängig von der Endmontage an den Fahrgestellen der Transportwagen mit den zur Festlegung notwendigen Befestigungselementen vormontiert werden. Die an der Montageplatte vormontierten Befestigungsmittel in Form einer Schrauben/Muttern-Kombination werden anschließend in der Endmontage durch die Durchstecköffnungen des oder der Befestigungselemente einseitig hindurchgesteckt, so dass die Montageplatte an der Unterseite des oder der Befestigungselemente zur Anlage kommt. Danach wird die Montageplätte seitlich in Richtung der länglichen nutförmigen Ausnehmungen benachbart der Durchstecköffnungen verschoben. Im anschließenden letzten Montageschritt wird dann mittels handlicher leichter und geräuscharmer Abschaltschrauber die Schrauben/Muttemkombination innerhalb der Befestigungselemente verschraubt.

Erfindungswesentlich dabei ist es auch, dass die Verschraubung bedingt durch das an dem Schraubenteil oder dem Mutternteil angeordnete Befestigungselement von außen erfolgen kann, ohne dass mittels zusätzlichem Werkzeug das korrespondierende Muttern- bzw. Schraubenteil gegen Verdrehen gesichert werden muss. Die durch üblicherweise ein Werkzeug vorzunehmende Verdrehsicherung wird erfindungsgemäß durch das am Schrauben- oder Muttemteil vorhandene Sicherungsbauteil gewährleistet.

Somit kann auf Grund der Vormontage der Befestigungsmittel respektive der Schrauben/Mutternelemente beispielsweise bereits im Herstellungswerk der Rollenbaueinheiten die Endmontagezeit der Transportwagen signifikant reduziert werden. Darüber hinaus ist durch den Einsatz von lärm- und vibrationsarmen Abschaltschraubem die Umweltbelastung des Montagepersonals erheblich reduziert. Weiterhin ist durch den Wegfall von Gewindebohrungen zur Festlegung der Montageplatten der Rollen gewährleistet, dass eine eventuell noch vorhandene Anlagerung von Strahlmitteln oder Farbrückständen im Bereich der Befestigung für die Rollenbaueinheiten für die erfindungsgemäße Befestigungsvorrichtung unerheblich ist.

Besondere Ausgestaltungen des Gegenstandes der Erfindung ergeben sich zusätzlich durch die in den auf den Hauptanspruch zurückbezogenen Unteransprüchen enthaltenen Merkmale.

Es hat sich insbesondere als vorteilhaft erwiesen, das oder die hohlprofilförmig ausgebildeten Befestigungselemente im Wesentlichen mit einem rechteckförmigen Querschnitt zu versehen, wobei vorzugsweise die breiten Wandbereiche des Querschnittes dem Fahrgestell des Transportwagens bzw. der Montageplatte der Bockrolle zugewandt sind. Auf diese Weise ergibt sich eine ausreichend große Anlagefläche der Montageplatte an dem oder den zugehörigen Befestigungselementen.

Darüber hinaus bestehen unterschiedliche Möglichkeiten der Gestaltung des Sicherungselementes des Schraubenteils bzw. des Muttemteils.

Eine vorteilhafte Weiterbildung sieht vor, dass das Sicherungselement des Schraubenteils am Schraubenkopf angeordnet ist und aus mindestens einer über den Außenumfang des Schraubenschaftes vorstehenden Haltenase besteht., wobei das Abstandsmaß A zwischen dem freien äußeren Ende der Haltenase und der Mitte des Schraubenschaftes größer ist als der halbe Wert des inneren Breitenmaßes B des Querschnittes der Befestigungselemente. Die beschriebene Gestaltung stellt einerseits sicher, dass eine zuverlässige Verdrehsicherung mittels des Sicherungselementes gewährleistet ist, wobei gleichzeitig ein leichtes Einfädeln des Schraubenteils in den inneren Kanal des Befestigungselementes möglich ist.

Die Haltenase des Sicherungselementes kann dabei vorteilhafterweise im Grundriss dreieckförmig ausgebildet sein.

Eine alternative Ausbildung des Sicherungselementes am Muttemteil sieht darüber hinaus vor, dass das Sicherungselement mindestens eine an einer Flachseite des Mutternteils vorstehende, im Grundriss dreieckförmig ausgebildete Haltenase aufweist, wobei das Abstandsmaß A zwischen dem freien äußeren Ende der Haltenase und der Mitte der Gewindebohrung des Mutternteils größer ist als der halbe Wert des inneren Breitenmaßes B des Querschnittes des korrespondierenden Befestigungselementes. Durch diese erfindungsgemäße Gestaltung des Sicherungselementes am Mutternteil ergeben sich die gleichen Vorteile wie bereits bei der oben in der Beschreibung des Sicherungselementes des Schraubenteils geschilderten Variante.

Eine dritte Möglichkeit der Gestaltung des Sicherungselementes des Mutternteils sieht vor, dass am Außenumfang der Mutter mindestens eine vorstehende Haltenase ausgebildet ist, wobei das Abstandsmaß A zwischen dem freien äußeren Ende der Haltenase und der Mitte des Schraubenschaftes größer ist als der halbe Wert des inneren Breitenmaßes B des Querschnittes des zugehörigen Befestigungselementes. Das Sicherungselement kann dabei am Außenumfang vorteilhafterweise auch zwei Haltenasen aufweisen.

Eine ergänzende vorteilhafte Weiterbildung des Gegenstandes der Erfindung sieht darüber hinaus vor, dass die am Fahrgestell des Transportwagens vorgesehenen Befestigungselemente in ihrer Länge größer bemessen sind als die Breite der Montageplatte. Die Befestigungselemente können dabei auch über die gesamte Breite oder Länge des Transportwagens reichen, so dass mehrere Rollenbaueinheiten an jeweils einem Befestigungselement festgelegt werden können.

Jedes Befestigungselement ist zweckmäßigerweise dabei mit zwei oder mehr Durchstecköffnungen für die Befestigungsmittel in Form der Schrauben/Muttemkombination versehen.

Nachfolgend werden die Möglichkeiten der Ausgestaltung des Gegenstandes der Erfindung anhand der beigefügten Zeichnungen näher erläutert.

Es zeigt:
- Figur 1: eine perspektivische Darstellung des Anbaubereiches des Fahrgestells eines Transportwagens für eine zugehörige Bockrolle vor der Montage,
- Figur 2: eine perspektivische Darstellung des Anbaubereiches aus Figur 1 nach dem Ansetzen der Bockrolle in die Aufnahmevorrichtung,
- Figur 3: eine vergrößerte perspektivische Darstellung des Detailbereiches A aus Figur 2 unmittelbar nach dem Einsetzen der Bockrolle in die Aufnahmevorrichtung,
- Figur 4: eine vergrößerte Darstellung des Details A aus Figur 2 während des Montagevorganges für die Bockrolle,
- Figur 5: eine vergrößerte Darstellung des Details A aus Figur 2 mit einer alternativen Ausgestaltung der Befestigungsmittel, unmittelbar nach Einsetzen der Bockrolle in die Aufnahmevorrichtung,
- Figuren 6: eine vergrößerte Darstellung des Details A aus Figur 2 mit der Ausgestaltungsvariante der Figur 5 während des Montagevorganges,
- Figur 7a, 7b: Einzelteildarstellungen einer erfindungsgemäßen Ausgestaltungsvariante des Schraubenteils als Befestigungsmittel,
- Figur 8a, 8b: Darstellungen einer alternativen Ausgestaltungsvariante des Schraubenteils als Befestigungsmittel,
- Figur 9: eine perspektivische Darstellung einer weiteren Ausgestaltungsvariante des Schraubenteils entsprechend der Verwendung in den Figuren 5 und 6,
- Figur 10: eine zusätzliche Ausgestaltungsvariante der Erfindung gemäß Figur 9 sowie der Figuren 5 und 6,
- Figur 11: eine perspektivische Darstellung einer weiteren Variante des Befestigungselementes
und
- Figur 12: eine perspektivische Darstellung einer Gestaltung eines Befestigungselementes analog der Figur 11

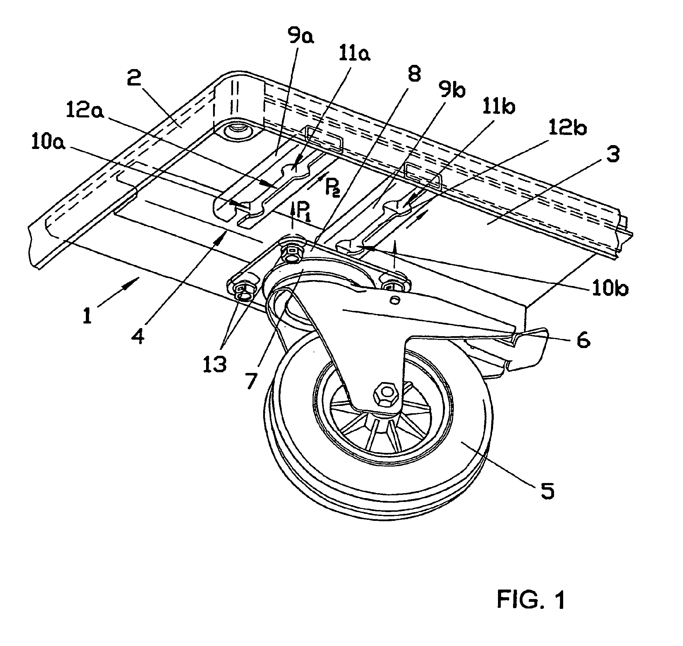

In der Figur 1 ist der Teilbereich eines Fahrgestells 1 eines Transportwagens dargestellt, an dem eine Rolle 5 festgelegt werden soll. Die Festlegung der Rolle erfolgt, wie dies aus der Figur hervorgeht, im Eckbereich des Transportwagens, wobei das Fahrgestell aus einem umlaufenden Rahmen 2 besteht, in oder an den eine Bodenplatte 3 angebaut ist. Im Eckbereich des Fahrgestells 1 befindet sich erfindungsgemäß eine insgesamt mit 4 bezeichnete Aufnahmevorrichtung, an die die Rolle 5 angebaut wird. Die Rolle 5 als Bauteilgruppe besteht im Wesentlichen aus einem Rad, welches in einer Rollenhalterung 6 aufgenommen ist. Die Rollenhalterung 6 wiederum ist drehbar an einem Befestigungsteller 7 festgelegt. Der Befestigungsteller 7 wiederum ist an seiner der Rollenhalterung abgewandten Seite an einer Montageplatte 8 befestigt, wobei zur Befestigung vorzugsweise eine Schraubverbindung genutzt wird, die hinlänglich bekannt und in den Darstellungen nicht näher ausgeführt ist.

Die Montageplatte 8 ist im Wesentlichen im Grundriss rechteckförmig ausgebildet und weist in ihren Eckbereichen jeweils Durchgangsbohrungen auf, in denen Befestigungsmittel in Form einer Schrauben/Mutternkombination vormontiert sind. Die gesamte Rollenbaugruppe wird vor der Montage am Fahrgestell eines Transportwagens beim Hersteller der Rollen fertig vormontiert.

Die Aufnahmevorrichtung 4 an der Unterseite des Fahrgestells 1 des Transportwagens weist entsprechend einer ersten Ausgestaltungsvariante erfindungsgemäß, wie dies aus der Figur 1 ersichtlich ist, zwei Befestigungselemente 9a und 9b auf. Die Befestigungselemente 9a und 9b sind beabstandet zueinander im Wesentlichen parallel ausgerichtet und bestehen aus einem rechteckförmigen Hohlprofilquerschnitt. Die Befestigungselemente sind dabei so ausgerichtet, dass die breiten Wandbereiche des Hohlprofilquerschnittes dem Fahrgestell 1 des Transportwagens bzw. der Montageplatte 8 der Bockrolle 5 zugewandt sind. An der der Montageplatte 8 der Bockrolle 5 zugewandten Unterseite des eines jeden Befestigungselementes 9a, 9b befinden sich Durchstecköffnungen 10a, 10b am Befestigungselement 9a und Durchstecköffnungen 11a, 11 b am Befestigungselement 9b. Benachbart der Durchstecköffnungen 10a, 10b, 11a, 11 b sind die Befestigungselemente 9a, 9b jeweils mit schlitzförmigen Ausnehmungen 12a und 12b ausgestattet.

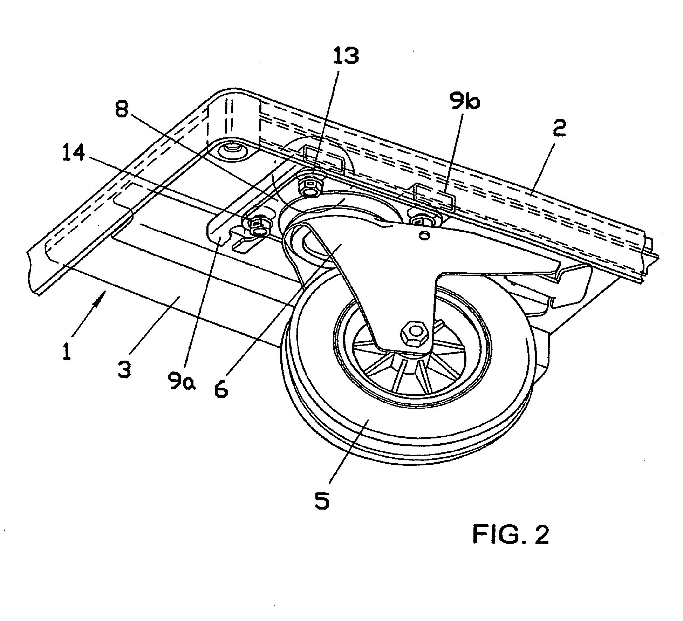

Der Montagevorgang für die Befestigung der Rollenbaugruppe mittels der Montageplatte 8 erfolgt entsprechend der Pfeildarstellung der Figur 1. Die Montageplatte 8 wird dabei entsprechend dem Pfeil P1 an die Befestigungselemente 9a, 9b herangeführt und an deren Unterseite zur Anlage gebracht. Dabei durchstoßen die an der Montageplatte 8 festgelegten Befestigungsmittel in Form der Schrauben/Mutternkombination die jeweils in den Befestigungselementen 9a, 9b vorhandenen Durchstecköffnungen 10a, 10b bzw. 11a, 11b. Nachdem die Montageplatte 8 an der Unterseite der Befestigungselemente zur Anlage gebracht worden ist, wird diese anschließend entsprechend dem Pfeil P2 seitlich in Richtung der vorhandenen Ausnehmungen 12a, 12b verschoben, bis eine Seitenkante der Montageplatte 8 am Rahmen 2 des Fahrgestells 1 zur Anlage kommt. Das Ergebnis des entsprechenden Montageschrittes ist in der Figur 2 festgehalten. Anschließend werden die Schrauben/Muttemkombination an der jeweiligen Montageplatte mittels eines Abschaltschraubers angezogen. Hierbei ist efindungswesentlich, dass entweder das Schraubenteil 13 oder das Muttemteil 14 der Befestigungsmittel mit einem Sicherungsbauteil 15, 18 versehen ist, durch welches eine Drehung des jeweiligen Schraubenteils 13 oder des Mutternteils 14 innerhalb des Hohlraumquerschnittes der Befestigungselemente 9a und 9b verhindert wird.

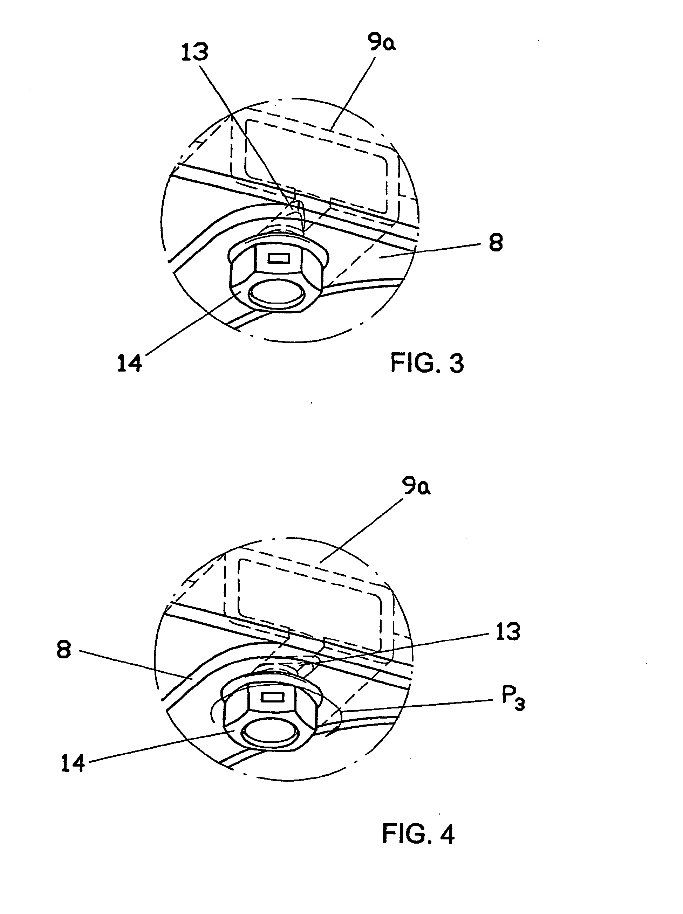

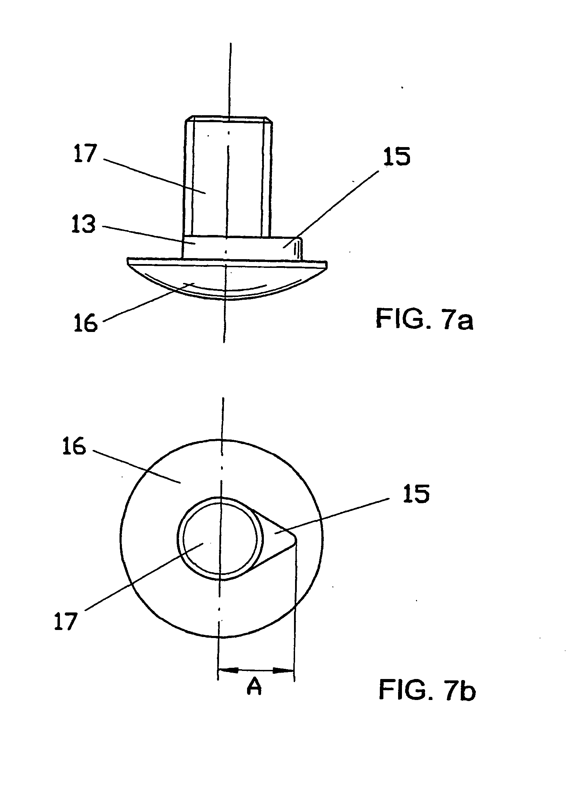

In den Figuren 3 und 4 ist im Rahmen der vergrößerten Darstellung des Details 8 aus Figur 2 eine erste Ausgestaltungsvariante des Sicherungsbauteils, angeordnet an einem Schraubteil, dargestellt. Das Schraubenteil ist entsprechend der Darstellung der Figur 7a und der Figur 7b ausgebildet und weist einen im Wesentlichen entsprechend einer Schlossschraube gestalteten Schraubenkopf 16 auf, an den sich ein mit einem Gewinde versehener Schraubenschaft 17 anschließt. Zwischen Schraubenkopf 16 und Schraubenschaft 17 befindet sich das erfindungswesentliche Sicherungselement 15. Dieses Sicherungselement 15 besteht aus mindestens einer über den Außenumfang des Schraubenschaftes 17 vorstehenden Haltenase, wobei das in der Figur 7b dargestellte Abstandsmaß A zwischen dem freien äußeren Ende der Haltenase und der Mitte des Schraubenschaftes 17 größer ist als der halbe Wert des inneren Breitenmaßes B des Querschnittes der Befestigungselemente 9a und 9b. Das Breitenmaß B ist dabei der Figur 3 zu entnehmen.

In dieser Figur ist die Montageplatte 8 unmittelbar nach dem Ansetzen an die Befestigungselemente 9a und 9b und dem Verschieben innerhalb der Ausnehmungen 12a und 12b dargestellt. Das Sicherungselement 15 befindet sich dabei im Wesentlichen parallel zur Längserstreckung der Ausnehmung 12a.

In der Figur 4 ist dargestellt, dass bei einer Verdrehung des Mutternteiles 14 entsprechend dem Pfeil P3 zunächst auch eine Verdrehung des Schraubenteiles 13 mit dem daran befindlichen Sicherungselement 15 erfolgt. Nach einer Drehung von ca. 90° gelangt dabei die Spitze des haltenasenförmig ausgebildeten Sicherungselementes an der Wandung des Befestigungselementes 9a zur Anlage. Auf Grund der Tatsache, dass das Abstandsmaß A zwischen dem freien äußeren Ende der Haltenase und der Mitte des Schraubenschaftes größer bemessen ist als der halbe Wert des inneren Breitenmaßes B des Querschnittes des Befestigungselementes 9a kann eine weitere Verdrehung des Schraubenteiles 13 dann nicht mehr erfolgen. Somit bewirkt ein weiteres Anziehen des Mutternteiles 14 mittels beispielsweise eines üblichen Abschaltschraubers eine Festlegung der Montageplatte 8 an der Unterseite der Befestigungselemente 9a und 9b.

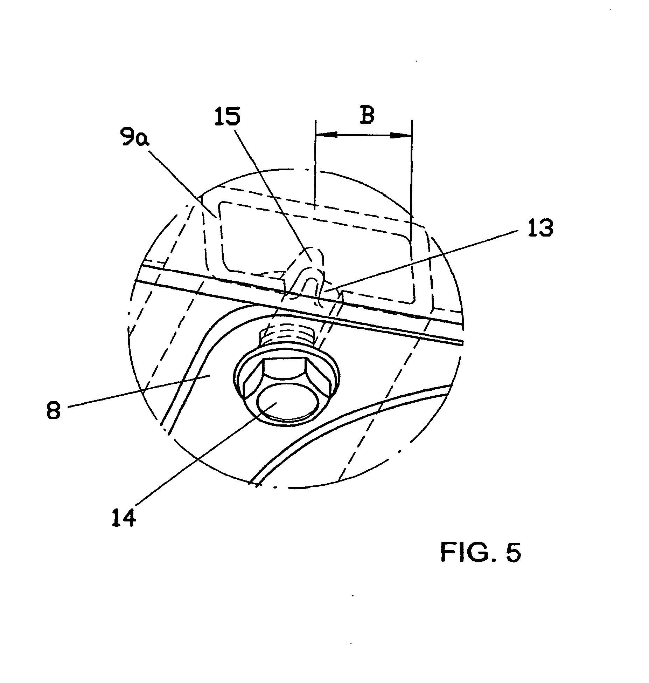

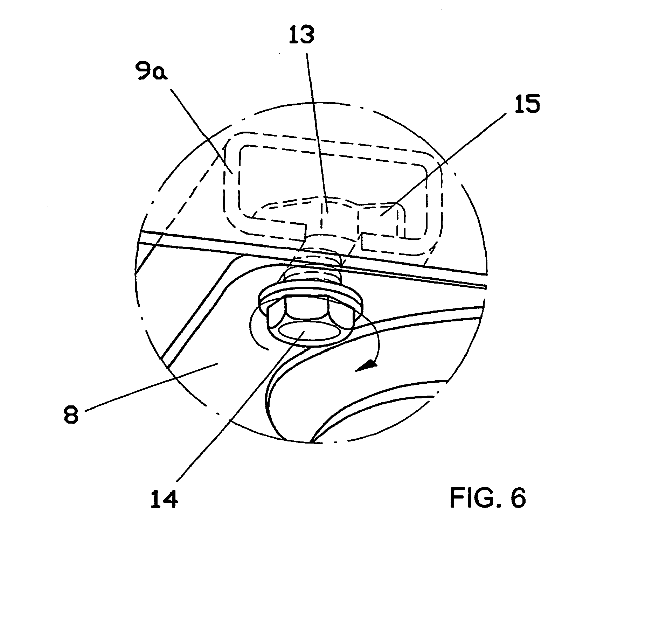

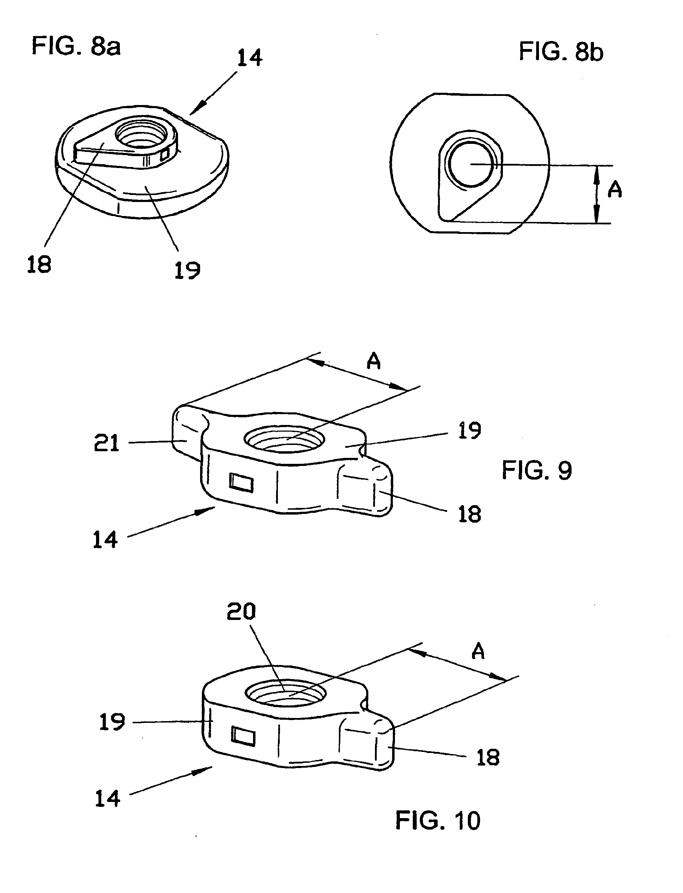

In den Figuren 5 und 6 ist eine alternative Ausgestaltungsvariante des Sicherungselementes 15 in Verbindung mit der Detaildarstellung D aus Figur 2 abgebildet. Dabei ist das Sicherungselement 15 am Mutternteil der Schrauben/Mutternkombination zur Festlegung der Montageplatte 8 am Fahrgestell 1 des Transportwagens angeordnet. Das Sicherungselement 15 ist dabei entsprechend der Darstellung der Figuren 9 und 10 als am Außenumfang der Mutter vorstehende Haltenase ausgebildet. Das Abstandsmaß A zwischen dem freien äußeren Ende der Haltenase und der Mitte der Gewindebohrung 20 des Muttemteiles 14 ist dabei größer bemessen als der halbe Wert des inneren Breitenmaßes B des Querschnittes der Befestigungselemente 9a bzw. 9b. Das Muttemteil 14 entsprechend der Figuren 9 und 10 besteht dabei aus einem Mutterkörper 19, in dem die Gewindebohrung 20 angeordnet ist. Radial abstehend von dem Mutterkörper 19 können dabei ein Sicherungselement 18 und gegebenenfalls ein weiteres Sicherungselement 21 angeordnet sein.

In der Figur 5 ist das Muttemteil 14 zunächst so ausgerichtet, dass nach Ansetzen der Montageplatte 8 das Sicherungselement 15 im Wesentlichen in Längsrichtung der Ausnehmung 12a weist. Eine Drehung des Schraubenteiles 13 entsprechend dem Pfeil P3 in Figur 6 bewirkt dann zunächst eine Drehung des Muttemteiles 14 mit dem daran befindlichen Sicherungselement 15. Sobald die Außenkante des haltenasenförmig ausgebildeten Sicherungselementes 15 an der Innenwandung des Befestigungselementes 9a zur Anlage kommt, wird auf Grund der aufeinander abgestimmten Werte der Maße A und B eine weitere Drehung des Mutternteiles verhindert. Somit kann die Montageplatte 8 durch weitere Drehung des Schraubenteiles 13 endgültig an den Befestigungselementen 9a und 9b festgelegt werden.

In der Darstellung der Figuren 8a und 8b ist darüber hinaus eine weitere Ausgestaltungsvariante des Sicherungselementes 18 an einem entsprechenden Muttemteil 14 dargestellt. Diese Ausgestaltungsvariante entspricht im Wesentlichen derjenigen der bereits in den Figuren 7a und 7b dargestellten Haltenase am Schraubenteil 13.

Aus der Figur 8a und 8b ist ersichtlich, dass das Sicherungselement 18 des dort dargestellten Muttemteiles als an einer Flachseite des zum Mutternteil 14 gehörenden Mutterkörper 19 vorstehende im Grundriss im Wesentlichen dreieckförmig ausgebildete Haltenase gestaltet ist, wobei das Abstandsmaß A zwischen dem freien äußeren Ende der Haltenase und der Mitte der Gewindebohrung 20 größer ist als der halbe Wert des inneren Breitenmaßes B des Querschnittes der Befestigungselemente 9a und 9b. Die aufeinander abgestimmten Werte der Maße A und B verhindern entsprechend der Beschreibung hinsichtlich der Figuren 5 und 6 eine Drehung des Mutternteiles 14 innerhalb des Innenraumes des Hohlraumquerschnittes der Befestigungselemente 9a und 9b. Natürlich sind hinsichtlich der Gestaltung des Sicherungselementes sowohl am Schraubenteil 13 als auch am Mutternteil 14 weitere vorteilhafte Ausbildungen denkbar, die sich auf die Dicke des Sicherungselementes und zusätzlich auf die Grundrissgestaltung beziehen können. Die dreieckförmige Gestaltung des Sicherungselementes stellt dabei lediglich eine vorteilhafte Ausführungsform dar, andere Grundrissgestaltungen sind selbstverständlich gleichfalls denkbar, solange die aufeinander abgestimmte Ausbildung der Abmaße A und B gewährleistet ist.

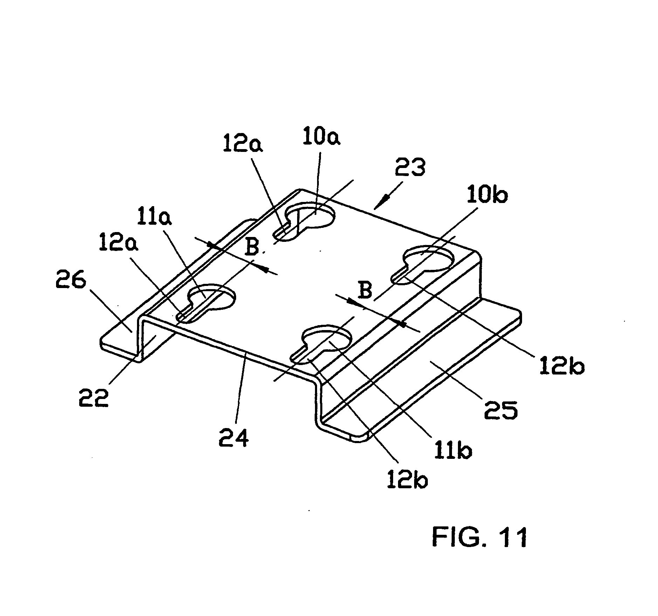

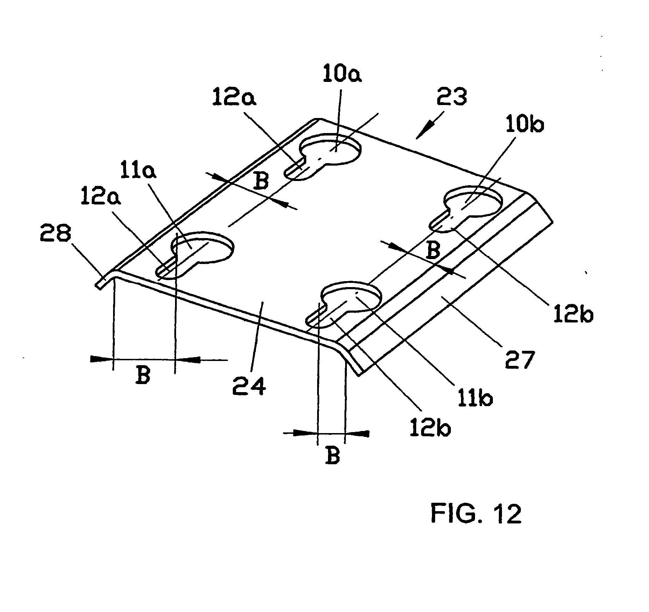

Die in den Figuren 1 bis 10 dargestellte Ausführungsvariante der Erfindung basiert unter anderem darauf, dass die Aufnahmevorrichtung 4 zwei Befestigungselemente 9a und 9b aufweist. Eine derartige konstruktive Gestaltung lässt sich dahingehend variieren, dass die beiden Befestigungselemente 9a und 9b zu einem Gesamtbauteil zusammengefasst werden. Eine Ausgestaltung eines derartigen Befestigungselementes 23 ist in unterschiedlicher Ausführung in den Figuren 11 und 12 dargestellt.

In der Figur 11 ist das Befestigungselement 23 aus einem mehrmals gekanteten plattenförmigen Blechbauteil hergestellt. Das Blechbauteil besitzt dabei in der Mitte einen hohlprofilförmig ausgebildeten Mittelbereich 24 sowie zwei seitlich über den Mittelbereich an gegenüber liegenden Seitenflächen überstehende Befestigungslaschen 25 und 26. Die Befestigungslaschen 25 und 26 sind dabei im Wesentlichen parallel zur Befestigungsebene für die Rollenbaueinheit angeordnet. Die Befestigungsebene für die Rollenbaueinheit 5 ist dabei durch den Mittelbereich 24 des Befestigungselementes 23 definiert, wobei der Mittelbereich 24, wie dies der Figur 11 zu entnehmen ist, vier Durchstecköffnungen 10a, 10b, 11 a und 11 b aufweist. An die Durchstecköffnungen 10a, 10b, 11a, 11b schließen sich seitlich längliche nutförmige Ausnehmungen 12a, 12b an, so dass sich prinzipiell eine analoge Ausgestaltung des Befestigungselementes 23 zu derjenigen oben beschriebenen Ausgestaltungsvariante mit den Befestigungselementen 9a und 9b ergibt.

Die Montage der Rollenbaueinheit erfolgt dabei analog der oben beschriebenen Variante, in dem die Montageplatte 8 der Rollenbaueinheit 5 an der Außenseite des Befestigungselementes 23 in dessen Mittelbereich 24 zur Anlage gebracht wird, wobei die an der Montageplatte 8 vormontierten Schraubenmuttemteile durch die jeweiligen Durchstecköffnungen 10a, 10b, 11a und 11b hindurchgreifen. Nach der Anlage der Montageplatte 8 am Mittelbereich 24 des Befestigungselementes 23 erfolgt eine Verschiebung in Richtung der neben den Durchstecköffnungen angeordneten Ausnehmungen 12a und 12b. Anschließend werden die Verschraubungen an der Montageplatte angezogen. Erfindungswesentlich für die Gestaltung des Befestigungselementes 23 ist es, dass der Abstand des bereits oben erwähnten inneren Breitenmaßes B des Querschnittes des Befestigungsetementes 23 sich im vorliegenden Fall als Maß von der Mitte einer Durchstecköffnung bis zur inneren Oberfläche 22 des der durch die jeweiligen Durchstecköffnung benachbarten Innenwandbereiches ergibt. Das innere Breitenmaß B ist in der Figur 11 zur Verdeutlichung zweimal gezeigt. Das Maßverhältnis des Breitenmaßes B im Verhältnis zum Abstandsmaß A zwischen dem freien äußeren Ende der Haltenase und der Mitte der Gewindebohrung des Sicherungselementes 15 am Muttemteil 14 oder am Schraubenteil 13 stellt sicher, dass je nach Ausgestaltung der Befestigungstechnik eine Verdrehung des mit dem Sicherungselement 15 ausgestatteten Mutternteils 14 oder des Schraubensteils 13 nur so lange stattfinden kann, bis die Spitze des Sicherungselementes an der Oberfläche 22 des Innenwandbereiches des Befestigungselementes zur Anlage gekommen ist.

In der Darstellung der Figur 12 ist ergänzend eine dem Ausführungsbeispiel der Figur 11 ähnliche Ausgestaltungsvariante dargestellt. Das Befestigungselement 23 der Figur 12 ist dabei in der Herstellung einfacher, da hierbei auf die Ausbildung der in der Figur 11 sichtbaren Befestigungslaschen 25 und 26 verzichtet wurde. Das Befestigungselement 23 besteht somit nur noch aus einem Mittelbereich 24, in den die Durchstecköffnungen 10a, 10b, 11a und 11b sowie die damit verbundenen Ausnehmungen 12a und 12b eingebracht sind. An den Seitenrändern des Mittelbereiches 24 ist das Befestigungselement 23 mit Abkantungen versehen, durch die zwei Abstandsschenkel 27 und 28 gebildet sind. An ihrer freien Längsseite werden diese Abstandsschenkel 27 und 28 beispielsweise durch Verschweißen mit der Unterkonstruktion bzw. dem Fahrgestell des Transportwagens verbunden. Nach der Anbindung des Befestigungselementes 23 an die Unterkonstruktion des Transportwagens entsteht wiederum in Analogie zu dem in der Figur 11 dargestellten Befestigungselement sowie zu den in der oben genannten ersten Ausgestaltungsvariante dargestellten Befestigungselementen 9a und 9b eine hohlprofilförmige Ausbildung, so dass eine entsprechende Befestigung der Montageplatte 8 einer Rollenbaueinheit problemlos erfolgen kann.

Das Breitenmaß B ergibt sich für die Ausgestaltungsvariante der Figur 12 in Analogie an das in der Figur 11 dargestellte Befestigungselement 23 und ist ergänzend zur Verdeutlichung in der Figur 12 zweifach eingetragen.

Durch die mittels der erfindungsgemäßen Befestigungsvorrichtung mögliche neuartige Festlegungstechnik der Rollen an einem Transportwagen oder auch anderen rollbaren Einheiten lassen sich die im Rahmen der Beschreibungseinleitung geschilderte Nachteile im Hinblick auf die ergonomischen Gegebenheiten bei der Montage derartiger Rollen signifikant verbessern. Darüber hinaus ist insbesondere von Vorteil, dass am Fahrgestell 1 eines Transportwagens nunmehr keine Gewindebohrungen mehr vorhanden sind, in welchen sich im Rahmen des Herstellungsprozesses unvermeidbare Ablagerungen festsetzen können. Insofern fallen bislang übliche vorbereitende Arbeiten für den eigentlichen Montagevorgang der Rollen nicht mehr an.

### Bezugszeichenliste

- 1: Fahrgestell
- 2: Rahmen
- 3: Bodenplatte
- 4: Aufnahmevorrichtung
- 5: Bockrolle
- 6: Rollenhalterung
- 7: Befestigungsteller
- 8: Montageplatte
- 9a: Befestigungselement
- 9b: Befestigungselement
- 10a: Durchstecköffnung
- 10b: Durchstecköffnung
- 11a: Durchstecköffnung
- 11b: Durchstecköffnung
- 12a: Ausnehmung
- 12b: Ausnehmung
- 13: Schraubenteil
- 14: Muttemteil
- 15: Sicherungselement
- 16: Schraubenkopf
- 17: Schraubenschaft
- 18: Sicherungselement
- 19: Mutterkörper
- 20: Gewindebohrung
- 21: Sicherungselement
- 22: Oberfläche
- 23: Befestigungselement
- 24: Mittelbereich
- 25: Befesügungslasche
- 26: Befestigungslasche
- 27: Abstandsschenkel
- 28: Abstandsschenkel

## Patentansprüche

1. Befestigungsvorrichtung für den Anbau von Rollenbaueinheiten am Fahrgestell von Transportwagen oder dergleichen, wobei die Rollenbaueinheiten mit einer Montageplatte versehen sind, die durch lösbare Befestigungsmittel an einer am Fahrgestell befindlichen Aufnahmevorrichtung festgelegt ist, und
die Aufnahmevorrichtung (4) mindestens ein mit Durchstecköffnungen (10a, 10b und 11a, 11b) an der der Rollenbaueinheit (5) zugewandten Unterseite versehenes Befestigungselement (9a, 9b) aufweist, wobei das Befestigungselement (9a, 9b) im Wandbereich benachbart der Durchstecköffnungen (10a, 10b und 11a, 11b) mit länglichen nutförmigen Ausnehmungen (12a, 12b) versehen ist, deren Breite, kleiner bemessenist als der Durchmesser der Durchstecköffnungen (10a, 10b und 11a, 11b), **dadurch gekennzeichnet, dass** das Befestigungselement hohlprofilförmig ausgebildet ist und dass zur Verbindung des Befestigungselementes (9a, 9b) mit der rollenseitigen Montageplatte (8) die Befestigungsmittel ein Schraubenteil (13) und ein zugehöriges Mutternteil (14) aufweisen, wobei entweder das Schraubenteil (13) oder das Muttemteil (14) mit einem Sicherungselement (15, 18) gegen eine Verdrehung des Schraubenteiles (14) oder des Mutternteiles (14) im Befestigungselement (9a, 9b) versehen und im montierten Zustand innerhalb des hohlprofilförmig ausgebildeten Befestigungselementes (9a, 9b) im Bereich der Ausnehmungen (12a, 12b) festgelegt ist.

2. Befestigungsvorrichtung nach Anspruch1,
**dadurch gekennzeichnet, dass**
die Aufnahmevorrichtung (4) mindestens zwei beabstandet zueinander angeordnete, mit Durchstecköffnungen (10a, 10b und 11a, 11b) an der der Bockrolle (5) zugewandten Unterseite versehene hohlprofilförmig ausgebildete Befestigungselemente (9a, 9b) aufweist.

3. Befestigungsvorrichtung nach Anspruch 1 oder 2,
**dadurch gekennzeichnet, dass**
die hohlprofilförmig ausgebildeten Befestigungselemente (9a, 9b) im Wesentlichen einen rechteckförmigen Querschnitt aufweisen, wobei vorzugsweise die breiten Wandbereiche des Querschnittes dem Fahrgestell (1) des Transportwagens bzw. der Montageplatte (8) der Rollenbaueinheit (5) zugewandt sind.

4. Befestigungsvorrichtung nach einem der Ansprüche 1 bis 3,
**dadurch gekennzeichnet, dass**
das Sicherungselement (15, 18) des Schraubenteils (13) am Schraubenkopf (16) angeordnet ist und aus mindestens einer über den Außenumfang des Schraubenschaftes (17) vorstehenden Haltenase besteht, wobei das Abstandsmaß A zwischen dem freien äußeren Ende der Haltenase und der Mitte des Schraubenschaftes (17) größer ist als der halbe Wert des inneren Breitenmaßes B des Querschnittes der Befestigungselemente (9a, 9b).

5. Befestigungsvorrichtung nach Anspruch 4,
**dadurch gekennzeichnet, dass**
die Haltenase des Sicherungselementes (15, 18) im Grundriss dreieckförmig ausgebildet ist.

6. Befestigungsvorrichtung nach einem der Ansprüche 1 bis 5,
**dadurch gekennzeichnet, dass**
jedes Befestigungselement (9a, 9b) mit zwei Durchstecköffnungen (10a, 10b oder 11 a, 11 b) für die Befestigungsmittel (7) versehen ist.

7. Befestigungsvorrichtung nach einem der Ansprüche 1 bis 5,
**dadurch gekennzeichnet, dass**
jedes Befestigungselement (9a, 9b) mit vier Durchstecköffnungen (10a, 10b oder 11a, 11b) für die Befestigungsmittel (7) versehen ist.

8. Befestigungsvorrichtung nach einem der Ansprüche 1 bis 7,
**dadurch gekennzeichnet, dass**
die Länge der hohlförmig ausgebildeten Befestigungselemente (9a, 9b) größer bemessen ist als die Breite der Montageplatte (8).

9. Befestigungsvorrichtung nach Anspruch 1 oder 2,
**dadurch gekennzeichnet, dass**
das Sicherungselement (15) des Muttemteiles (14) als mindestens eine an einer Flachseite des Muttemteiles (14) vorstehende, im Grundriss dreieckförmig ausgebildete Haltenase ausgebildet ist, wobei das Abstandsmaß A zwischen dem freien äußeren Ende der Haltenase und der Mitte der Gewindebohrung (20) größer ist als der halbe Wert des inneren Breitenmaßes B des Querschnittes der Befestigungselemente (9a, 9b) von der Mitte der Durchstecköffnung (10a, 10b, 11a, 11b) bis zur inneren Oberfläche (22) des benachbarten Innenwandbereich.

10. Befestigungsvorrichtung nach Anspruch 1 oder 2,
**dadurch gekennzeichnet, dass**
das Sicherungselement (15) des Muttemteiles (14) am Außenumfang des Mutternteiles (14) als mindestens eine vorstehende Haltenase ausgebildet ist, wobei das Abstandsmaß A zwischen dem freien äußeren Ende der Haltenase und der Mitte der Gewindebohrung (20) größer ist als der halbe Wert des inneren Breitenmaßes B des Querschnittes der Befestigungselemente (9a, 9b) von der Mitte der Durchstecköffnung (10a, 10b, 11a, 11 b) bis zur inneren Oberfläche (22) des benachbarten Innenwandbereich.

11. Befestigungsvorrichtung nach Anspruch 10,
**dadurch gekennzeichnet, dass**
am Außenumfang zwei Haltenasen angeordnet sind.

## Claims

1. Fastening device for attaching roller units to the chassis of transport trolleys or the like, wherein the roller units are provided with a mounting plate which is fixed by releasable fastening means to a receiving device located on the chassis, and said receiving device (4) has at least one fastening element (9a, 9b) which is provided with pass-through openings (10a, 10b and 11a, 11b) on the underside that faces towards the roller unit (5), wherein the fastening element (9a, 9b) is provided, in the wall region in a manner adjacent to the pass-through openings (10a, 10b and 11a, 11b), with elongated, groove-shaped clearances (12a, 12b), the width of which is of smaller dimensions than the diameter of the pass-through openings (10a, 10b and 11a, 11b),
**characterised in that** the fastening element is of hollow profile-shaped construction and that, for the purpose of connecting the fastening element (9a, 9b) to the mounting plate (8) on the roller, the fastening means have a screw part (13) and an appertaining nut part (14), wherein either the screw part (13) or the nut part (14) is provided with an element (15, 18) securing it against twisting of said screw part (13 or said nut part (14) within the fastening element (9a, 9b) and, in the mounted condition, is fixed inside the fastening element (9a, 9b) of hollow profile-shaped construction in the region of the clearances (12a, 12b).

2. Fastening device according to claim 1,
**characterised in that**
the receiving device (4) has at least two fastening elements (9a, 9b) of hollow profile-shaped construction which are arranged in a manner spaced apart from one another and are provided with pass-through openings (10a, 10b and 11a, 11b) on the underside that faces towards the fixed roller (5).

3. Fastening device according to claim 1 or 2,
**characterised in that**
the fastening elements (9a, 9b) of hollow profile-shaped construction essentially have a rectangular cross-section, the broad wall regions of said cross-section preferably facing towards the chassis (1) of the transport trolley or the mounting plate (8) of the roller unit (5).

4. Fastening device according to one of claims 1 to 3,
**characterised in that**
the securing element (15, 18) of the screw part (13) is arranged on the screw head (16) and consists of at least one retaining nose that protrudes beyond the outer periphery of the screw shaft (17), the distance dimension A between the free outer end of the retaining nose and the centre of the screw shaft (17) being greater than half the value of the inner width dimension B of the cross-section of the fastening elements (9a, 9b).

5. Fastening device according to claim 4,
**characterised in that**
the retaining nose of the securing element (15, 18) is of triangular construction in plan view.

6. Fastening device according to one of claims 1 to 5,
**characterised in that**
each fastening element (9a, 9b) is provided with two pass-through openings (10a, 10b or 11a, 11b) for the fastening means (7).

7. Fastening device according to one of claims 1 to 5,
**characterised in that**
each fastening element (9a, 9b) is provided with four pass-through openings (10a, 10b or 11a, 11b) for the fastening means (7).

8. Fastening device according to one of claims 1 to 7,
**characterised in that**
the length of the fastening elements (9a, 9b) of hollow profile-shaped construction is of greater dimensions than the width of the mounting plate (8).

9. Fastening device according to claim 1 or 2,
**characterised in that**
the securing element (15) of the nut part (14) is constructed as at least one retaining nose which protrudes on one flat side of said nut part (14) and is of triangular cross-section in plan view, the distance dimension A between the free outer end of the retaining nose and the centre of the threaded bore (20) being greater than half the value of the inner width dimension B of the cross-section of the fastening elements (9a, 9b) from the centre of the pass-through opening (10a, 10b, 11a, 11b) to the inner surface (22) of the adjacent inner wall region.

10. Fastening device according to claim 1 or 2,
**characterised in that**
the securing element (15) of the nut part (14) on the outer periphery of said nut part (14) is constructed as at least one protruding retaining nose, the distance dimension A between the free outer end of the retaining nose and the centre of the threaded bore (20) being greater than half the value of the inner width dimension B of the cross-section of the fastening elements (9a, 9b) from the centre of the pass-through opening (10a, 10b, 11a, 11b) to the inner surface (22) of the adjacent inner wall region.

11. Fastening device according to claim 10,
**characterised in that**
two retaining noses are arranged on the outer periphery.

## Revendications

1. Dispositif de fixation pour le montage d'unités à roulette sur le châssis de véhicules de transport ou similaires, les unités à roulette étant pourvues d'une plaque de montage fixée par des moyens de fixation amovibles contre un dispositif de réception se trouvant sur le châssis, et
le dispositif de réception (4) comportant au moins un élément de fixation (9a, 9b) pourvu d'ouvertures d'insertion (10a, 10b et 11a, 11b) sur sa face inférieure opposée à l'unité à roulette (5), ledit élément de fixation (9a, 9b) étant pourvu dans sa région de paroi d'évidements (12a, 12b) oblongs en forme de rainures, contigus aux ouvertures d'insertion (10a, 10b et 11a, 11b), dont la largeur est prévue inférieure au diamètre des ouvertures d'insertion (10a, 10b et 11a, 11b),
**caractérisé en ce que** l'élément de fixation est réalisé sous forme de profilé creux, et **en ce que** pour la connexion de l'élément de fixation (9a, 9b) à la plaque de montage (8) côté roulette, les moyens de fixation comportent une pièce à vis (13) et une pièce d'écrou (14) correspondante, la pièce à vis (13) ou bien la pièce d'écrou (14) étant pourvue d'un élément de blocage (15, 18) contre une rotation de la pièce à vis (14) ou de la pièce d'écrou (14) dans l'élément de fixation (9a, 9b), et étant fixée en état de montage à l'intérieur de l'élément de fixation (9a, 9b) réalisé en forme de profilé creux dans la région des évidements (12a, 12b).

2. Dispositif de fixation selon la revendication 1,
**caractérisé en ce que**
le dispositif de réception (4) comporte au moins deux éléments de fixation (9a, 9b) réalisés en forme de profilés creux espacés l'un de l'autre, avec des ouvertures d'insertion (10a, 10b et 11a, 11b) sur la face inférieure opposée à la roulette fixe (5).

3. Dispositif de fixation selon la revendication 1 ou 2,
**caractérisé en ce que**
les éléments de fixation (9a, 9b) réalisés en forme de profilés creux présentent une section sensiblement rectangulaire, les zones de paroi larges de la section étant préférentiellement opposées au châssis (1) du chariot de transport ou de la plaque de montage (8) de l'unité à roulette (5).

4. Dispositif de fixation selon l'une des revendications 1 à 3,
**caractérisé en ce que**
l'élément de blocage (15, 18) de la pièce à vis (13) est disposé contre la tête de vis (16) et consiste en au moins un ergot de maintien faisant saillie de la périphérie extérieure de la tige de vis (17), la cote d'espacement A entre l'extrémité extérieure libre de l'ergot de maintien et le centre de la tige de vis (17) étant supérieure à la moitié de la valeur de la cote de largeur intérieure B de la section des éléments de fixation (9a, 9b).

5. Dispositif de fixation selon la revendication 4,
**caractérisé en ce que**
l'ergot de maintien de l'élément de blocage (15, 18) est réalisé avec une forme en plan triangulaire.

6. Dispositif de fixation selon l'une des revendications 1 à 5,
**caractérisé en ce que**
chaque élément de fixation (9a, 9b) est pourvu de deux ouvertures d'insertion (10a, 10b ou 11a, 11b) pour les moyens de fixation (7).

7. Dispositif de fixation selon l'une des revendications 1 à 5,
**caractérisé en ce que**
chaque élément de fixation (9a, 9b) est pourvu de quatre ouvertures d'insertion (10a, 10b ou 11a, 11b) pour les moyens de fixation (7).

8. Dispositif de fixation selon l'une des revendications 1 à 7,
**caractérisé en ce que**
la longueur des éléments de fixation (9a, 9b) réalisés en forme de profilés creux est prévue supérieure à la largeur de la plaque de montage (8).

9. Dispositif de fixation selon la revendication 1 ou 2,
**caractérisé en ce que**
l'élément de blocage (15) de la pièce d'écrou (14) est réalisé sous forme d'au moins un ergot de maintien faisant saillie sur un côté plat de la pièce d'écrou (14), et réalisé avec une forme en plan triangulaire, la cote d'espacement A entre l'extrémité extérieure libre de l'ergot de maintien et le centre de l'alésage fileté (20) étant supérieure à la moitié de la valeur de la cote de largeur intérieure B de la section des éléments de fixation (9a, 9b), du centre de l'ouverture d'insertion (10a, 10b, 11a, 11b) à la surface intérieure (22) de la zone de paroi intérieure contiguë.

10. Dispositif de fixation selon la revendication 1 ou 2,
**caractérisé en ce que**
l'élément de blocage (15) de la pièce d'écrou (14) est réalisé sous forme d'au moins un ergot de maintien faisant saillie sur la périphérie extérieure de la pièce d'écrou (14), la cote d'espacement A entre l'extrémité extérieure libre de l'ergot de maintien et le centre de l'alésage fileté (20) étant supérieure à la moitié de la valeur de la cote de largeur intérieure B de la section des éléments de fixation (9a, 9b), du centre de l'ouverture d'insertion (10a, 10b, 11a, 11b) à la surface intérieure (22) de la zone de paroi intérieure contiguë.

11. Dispositif de fixation selon la revendication 10,
**caractérisé en ce que**
deux ergots de maintien sont disposés sur la périphérie extérieure.
